# EUROPEAN PATENT SPECIFICATION

(11) **EP 3 822 585 B1**
(45) Date of publication and mention of the grant of the patent: **08.01.2025**
(21) Application number: 19209337.5
(22) Date of filing: 15.11.2019
(51) Int. Cl.: G01C 21/34, G01C 21/36

(54) **VEHICLE NAVIGATION SYSTEM AND METHOD FOR PROVIDING TURN GUIDANCE FOR A DRIVER OF A VEHICLE**
FAHRZEUGNAVIGATIONSSYSTEM UND VERFAHREN ZUR BEREITSTELLUNG EINER ABBIEGEFÜHRUNG FÜR EINEN FAHRER EINES FAHRZEUGS
SYSTÈME DE NAVIGATION DE VÉHICULE ET PROCÉDÉ PERMETTANT DE FOURNIR UN GUIDAGE DE VIRAGE À UN CONDUCTEUR D'UN VÉHICULE

(43) Date of publication of application: 19.05.2021
(73) Proprietor: Volkswagen AG, 38440 Wolfsburg (DE)
(72) Inventor: Lee, Hyunmin, 38100 Braunschweig (DE)

(56) References cited:
- EP-A1- 1 378 724
- EP-A2- 3 495 777
- WO-A1-2008/147006
- DE-A1- 102007 014 674
- US-A1- 2005 288 859
- US-A1- 2013 261 969
- US-A1- 2017 350 719

## Description

The invention relates to a vehicle navigation system and a method for providing turn guidance for a driver of a vehicle. Further, the invention relates to a vehicle comprising such vehicle navigation system.

Manoeuvring a car in an urban area with complex crossings and irregular connections cause difficulties for drivers to follow the route determined and displayed by the navigation system.

The state of the art discloses conventional navigation techniques with informing the road name, the direction to take and the estimated distance to make a turn at a turning point. These solutions are not sufficiently intuitive and are not clearly recognizable by the driver.

DE 10 2007 014 674 A1 discloses a navigation device and method in which a front camera captures an image to extract a crossing sign that can be displayed in a pronounced manner. US 2017/0350719 A1 discloses an electronic navigation system in which external server provides a navigation module, which can calculate routes with user-specific learned landmarks and cause them to be displayed on an interface of a client device. EP 3 495 777 A2 discloses a vehicle control system in which a camera captures an image of an object close to an intersection and displays the image on the display unit. EP 1 378 724 A1 discloses a route guidance system that can sense the visual activity of a driver and displays a vision guidance reference object on the display in an enlarged manner. US 2013/0261969 A1 discloses a guiding technology in which a landmark information is confirmed to be present prior to highlighting the landmark information in the captured image. WO2008/147006 A1 discloses an intersection guidance method in which a selected representation POI corresponding to a turning direction is displayed. US 2005/0288859 A1 discloses a digital mapping technique in which visually oriented driving directions including waypoints can be given.

The invention is based on the objective problem to provide a navigation system and a corresponding method that provides an improved and more intuitive guidance to follow the determined route at turning points.

According to the invention a vehicle navigation system is provided as appended in claim 1..

A sensor means may comprise different types of sensors. For example, the sensor means may comprise a position sensor, for example GPS sensor, a GLONASS sensor or a Galileo sensor to generate position data indicative of the current geographical position of the vehicle, but the invention is not restricted thereto. The sensor means may also comprise a velocity sensor to generate velocity data indicative of the current velocity of the vehicle. The display unit may for example be part of an interface unit. The display unit is configured to visualize route information to communicate with the driver. A processor unit may be a microprocessor, a central processing unit or the like. The selection of the destination by the user may preferably be performed via a manual selection input, for example by using a user interface. A turning point may be a point at which the vehicle has to be manoeuvred to follow the determined route into a different direction. The route may be determined based on conventional techniques, e.g. by using the generated position data for geolocation in combination with for example electronic maps for displaying. A point of interest may be an object, in particular a geo-object but the invention is not restricted thereto. A point of interest suitable for recognition may be a point of interest which the driver should be able to notice when making the turn at the turning point. The highlighting of the point of interest may be preferably performed such that the perception of the driver of the determined point of interest on the display unit is improved by the highlighting. Highlighting may mean that the point of interest looks more significant than any other point of interest and thus is perceptive for human and physical recognition. Approaching to the turning point in other words may be expressed as coming to the turning point.

The invention has the advantage, that the driver of the vehicle is supported when turning at a turning point since the display unit highlights a particularly recognizable point of interest that the driver can see at the turning point in the real environment. The turning for the driver thus becomes more intuitive. Further, the display unit presents the information in a highlighted way such that the physical perception and recognition by the driver of the determined point of interest is improved. This highlighted information provides direct feedback for enabling improved orientation to turn the vehicle and to follow the route correctly avoiding detours. Thereby, also efficiency of transport and transport flow of vehicles is improved. Due to matching of the highlighted point of interest with the actual object to be recognized at the turning point environment makes it easier for the driver to turn since it is more intuitive.

In a preferred embodiment the processor unit may be configured to determine an estimated time to reach the turning point based on the generated data and is configured to determine that the vehicle is approaching the turning point, when the estimated time is below a threshold time. The threshold time may be for example 15 seconds or 10 seconds, but the invention is not restricted thereto. The estimated time may be determined based on the distance to the turning point and current velocity, determined by a sensor means, for example a position sensor as for example a GPS sensor or the like, see above, and a velocity sensor. This determination has the advantage that regardless of the current velocity of the vehicle the navigation system provides a sufficient time window for the driver to perceive and recognize the highlighted point of interest on the display unit and in the real environment.

Preferably, the processor unit may be configured to determine an estimated distance to the turning point based on the generated data and is configured to determine that the vehicle is approaching the turning point, when the determined distance is below a threshold distance. The distance may be determined based on the geographical position data received for example from a geographical sensor. Advantage here is that at crossings with traffic lights or in traffic jams, the distance criterion works reliably when the vehicle is not moving.

In a preferred embodiment not falling under the claimed invention, the processor unit may be configured to determine a point of interest among a plurality of points of interest at the turning point according to a stored predetermined priority list based on recognition strength of points of interest for a driver at the turning point. The most suitable point of interest for a particular turning point may thereby be highlighted.

Preferably, and not falling under the claimed invention, the processor unit may be configured to determine a point of interest among a plurality of points of interest based on if the point of interest is located on a side of the route to which the route is turning to at the turning point. Thereby, a criterion of a directional position with respect to the initial route of the point of interest is used to determine a most suitable point of interest for recognition.

Preferably, the processor unit may be configured to highlight the determined point of interest on the display unit via a colour, via intensity, brightness and/or via an animation. Combinations are also disclosed. These highlighting means improve physical recognition of the determined point of interest by the driver.

In a preferred embodiment, the point of interest may be a sign name, an icon, and/or building recognizable from the driver's point of view at the turning point. Combinations are also disclosed. These are preferable objects that can be usually readily recognized by a driver.

In another aspect of the invention a method for providing turn guidance to a driver of a vehicle is disclosed according to claim 6.

In a further aspect of the invention a vehicle comprising a vehicle navigation system according to one of the above described embodiments is disclosed. The advantages of the above method and the above vehicle are similar to the advantages of the corresponding vehicle navigation system as formulated for example above or as in the following.

Further aspects of the present invention could be learned from the dependent claims or the following description.

The various embodiments presented in the embodiments of the invention are, so far not the opposite is made explicit, combinable with each other mediating advantages.

The invention is explained in the following according to the following figures according to example embodiments of the present invention in which it is shown:
- Fig. 1: a navigation system according to an embodiment of the invention;
- Fig. 2: a display unit according to an embodiment of the present invention not falling under the claimed invention;
- Fig. 3: a display unit according to an embodiment of the present invention; and
- Fig. 4: a method for providing turn guidance according to an embodiment of the invention.

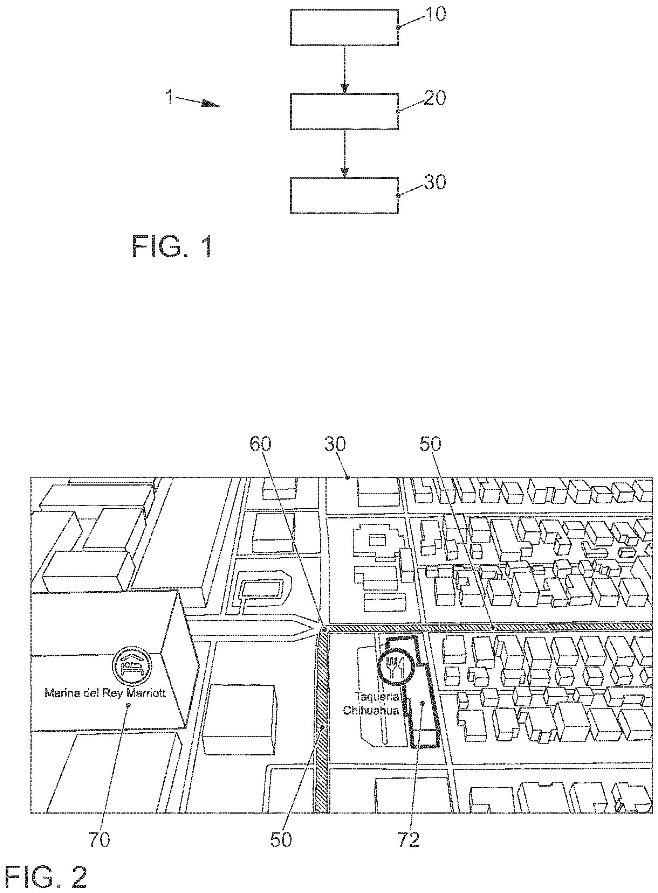

Fig. 1 shows schematically a vehicle navigation system 1 according to the present invention.

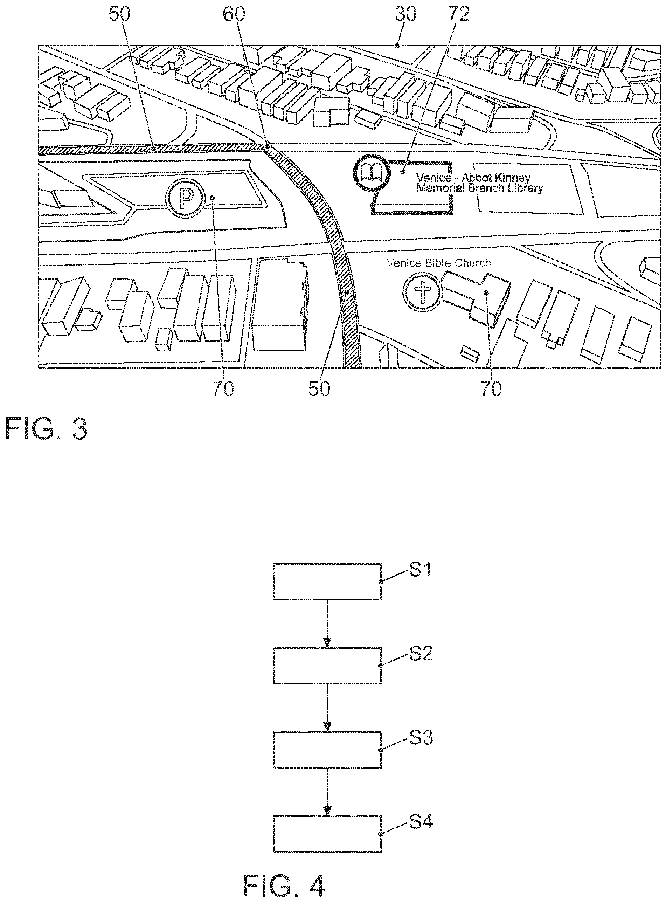

Fig. 2 shows a display unit 30 not falling under the claimed invention and Fig. 3 shows a display unit 30 for illustration of embodiments of the present invention. In the following, when appropriate, the description will be referred to one of the contents of Figs. 1 to 3, respectively.

The vehicle navigation system 1 according to Fig. 1 comprises a sensor means 10. The sensor means 10 is configured to generate data for use by the vehicle navigation system 1. The sensor means 10 may be comprise a positional sensor and/or a velocity sensor, for example a GPS sensor. The vehicle navigation system 1 further comprises a display unit 30. Further, the vehicle navigation system 1 comprises a processor unit 20. As indicated by Fig. 1, the sensor means 10 may be configured to transmit the generated data to the processor unit 20. The processor unit 20 may be configured to transmit control signals to the display unit 30 to control the display unit 30 and in particular to control the content to be displayed by the display unit 30. In other embodiments, not explicitly shown here, the display unit 30 may be part of a user interface and configured to receive a user input for example to select a route destination transmitted to the processor unit 20.

In particular, the processor unit 20 is configured to generate a route 50 to a destination selected by a user based on the generated data by the sensor means 10. The processor unit 20 is configured to control the display unit 30 to display the determined route 50, as can be seen in Figs. 2 (not falling under the claimed invention) to 3. The route 50 according to the present invention comprises at least one turning point 60 and also at least one point of interest 70, 72 located at the at least one turning point 60, see also the Figs. 2 (not falling under the claimed invention) to 3. A turning point 60 may also be referred to as a point of manoeuvre, where the driver has to manoeuvre the vehicle. At such a turning point 60 the driver has to turn the vehicle to follow the route 50 indicated by the display unit 30 or at least to change lanes or the like. For example, the turning point 60 is located at a crossing, as can be seen in both examples in Figs. 2 (not falling under the claimed invention) and 3.

According to the present invention, the processor unit 20 is configured to determine based on generated data by the sensor means 10 when the vehicle is approaching a turning point 60. The generated data of the sensor means 10 may for example include the current position or the current velocity of the vehicle, but the invention is not restricted thereto.

Further, the processor unit 20 is configured to determine a point of interest 72 at the turning point 60, wherein the point of interest 72 is suitable for recognition by the driver at the turning point 60. In alternative wording perception may be used for recognition. For example, as shown in Fig. 2 (not falling under the claimed invention), a building, here a restaurant building "Taqueria Chihuahua" is determined as point of interest 72 suitable for recognition. The determination of the point of interest 72 is performed when it is determined that the vehicle is approaching the turning point 60 or in other words coming to the turning point 60. The point of interest 70, 72 is also often referred to as POI. The point of interest 70 may be preferably a sign name, an icon, or a building recognizable from the driver's point of view at the turning point 60, but the invention is not restricted thereto. The point of interest 70 may be any object that is suitable for recognition by the driver at the corresponding turning point 60. In the example of Fig. 3, the determined point of interest 72 is a library building "Venice - Abbot Kinney Memorial Branch Library".

The processor unit 20 is configured to control the display unit 30 to highlight the determined point of interest 72 on the display unit 30 as can be seen in Figs. 2 (not falling under the claimed invention) and 3. In other words, the particular determined point of interest 72 is pointed up, when the vehicle is approaching or coming to the turning point 60. The processor unit 20 may be configured to highlight the determined point of interest 72 on the display unit 30 via a colour, via intensity, brightness and/or via an animation. Also here, the invention is not restricted thereto. Any form of highlighting is included, which improves the human physical perception such that driving control is advantageously influenced. The present invention has the advantage, that the driver of the vehicle is supported when turning since the display unit 30 highlights a particularly determined recognizable point of interest 72 that the driver can see at the turning point in the real environment. The turning for the driver thus becomes more intuitive. Further, the display unit 30 displays the information in a highlighted way thus is perceptive to human and physical recognition. The physical perception by the driver of the particularly determined point of interest 72 is improved. This highlighted information provides direct feedback for enabling improved orientation to turn the vehicle and to follow the route correctly without additional detours. Thereby, also efficiency of transport and transport flow of vehicles is improved. By matching the highlighted point of interest 72 with the actual object to be recognized at the turning point environment the turning of the vehicle by the driver at the turning point is improved and more intuitive.

In a preferred example, the processor unit 20 may be configured to determine an estimated time Te to reach the turning point 60 based on the generated data. Then, the processor unit 20 may be configured to determine that the vehicle is approaching the turning point 60, when the estimated time Te is below a threshold time Tth. For example, the generated data by the sensor means 10 may be local position of the vehicle, for example determined by a GPS sensor, and current velocity of the vehicle determined by a velocity sensor, for example by a GPS sensor. Then, the estimated time Te may be determined by the distance to the turning point 60 divided by the velocity. The determination has the advantage that regardless of the current velocity of the vehicle the navigation system provides a sufficient time window for the driver to recognize the highlighted point of interest on the display unit and in the real environment. The threshold time Tth may be preferably 10 seconds or 15 seconds, but the invention is not restricted thereto.

In alternative or additionally, the processor unit 20 may be configured to determine an estimated distance D to the turning point 60 based on the generated data and, may be configured to determine that the vehicle is approaching the turning point 60, when the determined distance D is below a threshold distance Dth. Also here, distance may be determined by the processor unit 20 based on position data from the sensor means 10 indicative of a current position and the location of the turning point 60, for example, by calculating the difference between these two location points. Such situation may be useful in cases of traffic lights. A threshold distance Dth may be for example 70 m, 50 m, or 30 m, but the invention is not restricted thereto. The latter may be for example suitable in an inner city crossing.

At a turning point 60 there are more than one points of interest 70, 72. For example in Fig. 2 (not falling under the claimed invention) a hotel building "Marina del Rey Marriott" and a restaurant building "Taqueria Chihuahua" are displayed by the display unit 30 as points of interest. In Fig. 3, for example, a parking lot, a library building "Venice - Abbott Kinney Memorial Branch Library" and a church "Venice Bible Church" are indicated by the display unit 30 as points of interest 70.

Then, the processor unit 20 is configured to determine a point of interest 72 among a plurality of points of interest 70, 72 at the turning point 60. This may be done, for example, according to a stored predetermined priority list, not falling under the claimed invention, based on recognition strength from a driver's point of view at the turning point 60. For example, it may be stored in a data base that at the turning point 60 in Fig. 3, the building "Venice - Abbott Kinney Memorial Branch Library" is the most recognizable point of interest 72 for orientation at the particular turning point 60.

In a preferred embodiment not falling under the claimed invention, the processor unit 20 may be configured to determine a point of interest 72 among a plurality of points of interest 70, 72 based on if the point of interest 72 is located on a side of the route 50 to which the route is turning to at the turning point 60. For example, in Fig. 2 (not falling under the claimed invention), at the turning point 60 two points of interest are generally recognizable, which is the building "Taqueria Chihuahua" and the hotel building "Marina del Rey Marriott". But since according the determined route 50 the driver must turn right to follow the route 50, the most recognizable building determined by the processor unit 20 may be the restaurant building "Taqueria Chihuahua" as it is located on the right side, as shown in Fig. 2 (not falling under the claimed invention). The latter thus provides better orientation and is therefore determined and highlighted on the display unit 30.

Further, the processor unit 20 is configured to determine a point of interest 72 among a plurality of points of interest 70, 72 on a side different to the side of the route 50 to which the route 50 is turning to at the turning point 60, only when no point of interest suitable for recognition is determined on the side of the route 50 to which the route 50 is turning to at the turning point 60. I.e., in Fig. 3, at the turning point 60 the route 50 turns left. The processor unit 20 here has determined that the parking lot on the left side is a point of interest 70 with low recognition strength for the driver. Therefore, in this case, the processor unit 20 has determined that the building "Venice-Abbott Kinney Memorial Branch Library" is the point of interest 72 with the highest recognition strength and thus highlights the latter in the display unit 72, see also Fig. 3.

In Fig. 4 a corresponding method for providing turn guidance to a driver of a vehicle is disclosed schematically. The method comprises providing sensor means 10 configured to generate data for use by a vehicle navigation system 1. The method further comprises providing a display unit 30 and a processor unit 20. The method further comprises in step S1 generating, by the processor unit 20, a route 50 for the vehicle to a destination selected by a user based on the generated data by the sensor means 10 and control the display unit 30 to display the route 50, wherein the route 50 comprises at least one turning point 60 and at least one point of interest 70 located at the at least one turning point 60. The method further comprises in step S2 determine, by the processor unit 20, based on generated data by the sensor means 10 when the vehicle is approaching a turning point 60. The method further comprises the step S3 of determine, by the processor unit 20, a point of interest 72 at the turning point 60 suitable for recognition by the driver at the turning point 60, when it is determined that the vehicle is approaching the turning point 60. The method further comprises the step S4 of controlling, by the processor unit 20, the display unit 30 to highlight the determined point of interest 72 on the display unit 30. Further method steps can be derived from the above description with respect to the navigation system 1.

### Reference signs

- 1: vehicle navigation system
- 10: sensor means
- 20: processor unit
- 30: display unit

- 50: route
- 60: turning point
- 70: point of interest
- 72: determined point of interest

- Te: estimated time
- Tth: threshold time
- D: distance
- Dth: threshold distance

## Claims

1. A vehicle navigation system (1), comprising:
- a sensor means (10) configured to generate data for use by the system;
- a display unit (30);
- a processor unit (20) configured to:
generate a route (50) for the vehicle to a destination selected by a user based on the generated data by the sensor means (10) and control the display unit (30) to display the route (50), wherein the route (50) comprises at least one turning point (60) and at least one point of interest (70) located at the at least one turning point (60);
determine based on generated data by the sensor means (10) when the vehicle is approaching a turning point (60);
**characterized in**,
when it is determined that the vehicle is approaching the turning point (60):
determine a point of interest (72) suitable for recognition by the driver at the turning point (60) with a highest recognition strength among a plurality of points of interest (70, 72) on a side different to the side of the route (50) to which the route is turning to at the turning point (60), only when no point of interest suitable for recognition is determined on the side of the route (50) to which the route (50) is turning to at the turning point (60) by determining that any point of interest on the side of the route (50) to which the route (50) is turning to at the turning point (60) is a point of interest (70) with low recognition strength for the driver; and
control the display unit (30) to highlight the determined point of interest (72) while displaying the plurality of points of interest (70, 72) on the display unit (30).

2. The system (1) of claim 1, wherein the processor unit (20) is configured to determine an estimated time to reach the turning point (60) based on the generated data and is configured to determine that the vehicle is approaching the turning point (60), when the estimated time (Te) is below a threshold time (Tth).

3. The system (1) of one of the claims 1 to 2, wherein the processor unit (20) is configured to determine an estimated distance (D) to the turning point (60) based on the generated data and is configured to determine that the vehicle is approaching the turning point (60), when the determined distance (D) is below a threshold distance (Dth).

4. The system (1) of one of the claims 1 to 3, wherein the processor unit (20) is configured to highlight the determined point of interest (72) on the display unit (30) via a colour, via an intensity, a brightness and/or via an animation.

5. The system (1) of one of the claims 1 to 4, wherein the point of interest (70, 72) is a sign name, an icon, or building recognizable from the drivers point of view at the turning point (60).

6. A method for providing turn guidance to a driver of a vehicle, comprising:
providing sensor means (10) configured to generate data for use by a vehicle navigation system (1);
providing a display unit (30);
providing a processor unit (20);
generating, by the processor unit (20), a route (50) for the vehicle to a destination selected by a user based on the generated data by the sensor means (10) and control the display unit (30) to display the route (50), wherein the route (50) comprises at least one turning point (60) and at least one point of interest (70) located at the at least one turning point (60) (S1);
determine, by the processor unit (20), based on generated data by the sensor means (10) when the vehicle is approaching a turning point (60) (S2);
**characterized in**,
when it is determined that the vehicle is approaching the turning point (60) (S3):
determine, by the processor unit (20), a point of interest (72) suitable for recognition by the driver at the turning point (60) with a highest recognition strength among a plurality of points of interest (70, 72) on a side different to the side of the route (50) to which the route is turning to at the turning point (60), only when no point of interest suitable for recognition is determined on the side of the route (50) to which the route (50) is turning to at the turning point (60) by determining that any point of interest on the side of the route (50) to which the route (50) is turning to at the turning point (60) is a point of interest (70) with low recognition strength for the driver;
control, by the processor unit (20), the display unit (30) to highlight the determined point of interest (72) while displaying the plurality of points of interest (70, 72) on the display unit (30) (S4).

7. A vehicle comprising a vehicle navigation system (1) according to one of the claims 1 to 5.

## Patentansprüche

1. Fahrzeugnavigationssystem (1), umfassend:
- ein Sensormittel (10), das konfiguriert ist, um Daten zur Verwendung durch das System zu erzeugen;
- eine Anzeigeeinheit (30);
- eine Prozessoreinheit (20), die konfiguriert ist zum:
Erzeugen einer Route (50) für das Fahrzeug zu einem Ziel, das durch einen Benutzer ausgewählt ist, basierend auf den erzeugten Daten durch das Sensormittel (10) und Steuern der Anzeigeeinheit (30), um die Route (50) anzuzeigen, wobei die Route (50) mindestens einen Wendepunkt (60) und mindestens einen Punkt von Interesse (70) umfasst, der sich an dem mindestens einen Wendepunkt (60) befindet;
Bestimmen, basierend auf erzeugten Daten durch das Sensormittel (10), wenn sich das Fahrzeug einem Wendepunkt (60) nähert;
**dadurch gekennzeichnet, dass**
wenn bestimmt wird, dass sich das Fahrzeug dem Wendepunkt (60) nähert:
Bestimmen eines Punkts von Interesse (72), der für eine Erkennung durch den Fahrer geeignet ist, an dem Wendepunkt (60) mit einer höchsten Erkennungsstärke unter einer Vielzahl von Punkten von Interesse (70, 72) auf einer anderen Seite als der Seite der Route (50), zu der die Route an dem Wendepunkt (60) wendet, nur dann, wenn auf der Seite der Route (50), zu der die Route (50) an dem Wendepunkt (60) wendet, kein Punkt von Interesse bestimmt wird, der für die Erkennung geeignet ist, durch Bestimmen, dass ein beliebiger Punkt von Interesse auf der Seite der Route (50), zu der die Route (50) an dem Wendepunkt (60) wendet, ein Punkt von Interesse (70) mit geringer Erkennungsstärke für den Fahrer ist; und
Steuern der Anzeigeeinheit (30), um den bestimmten Punkt von Interesse (72) hervorzuheben, während die Vielzahl von Punkten von Interesse (70, 72) auf der Anzeigeeinheit (30) angezeigt wird.

2. System (1) nach Anspruch 1, wobei die Prozessoreinheit (20) konfiguriert ist, um eine geschätzte Zeit zu bestimmen, um den Wendepunkt (60) basierend auf den erzeugten Daten zu erreichen, und konfiguriert ist, um zu bestimmen, dass sich das Fahrzeug dem Wendepunkt (60) nähert, wenn die geschätzte Zeit (Te) unter einer Schwellenzeit (Tth) liegt.

3. System (1) nach einem der Ansprüche 1 bis 2, wobei die Prozessoreinheit (20) konfiguriert ist, um eine geschätzte Distanz (D) zu dem Wendepunkt (60) basierend auf den erzeugten Daten zu bestimmen, und konfiguriert ist, um zu bestimmen, dass sich das Fahrzeug dem Wendepunkt (60) nähert, wenn die bestimmte Distanz (D) unter einer Schwellendistanz (Dth) liegt.

4. System (1) nach einem der Ansprüche 1 bis 3, wobei die Prozessoreinheit (20) konfiguriert ist, um den bestimmten Punkt von Interesse (72) auf der Anzeigeeinheit (30) mittels einer Farbe, mittels einer Intensität, einer Helligkeit und/oder mittels einer Animation hervorzuheben.

5. System (1) nach einem der Ansprüche 1 bis 4, wobei der Punkt von Interesse (70, 72) ein Schildname, ein Symbol oder ein Gebäude ist, das von der Sicht des Fahrers an dem Wendepunkt (60) erkennbar ist.

6. Verfahren zum Bereitstellen einer Wendeleitung für einen Fahrer eines Fahrzeugs, umfassend:
Bereitstellen eines Sensormittels (10), das konfiguriert ist, um Daten zur Verwendung durch ein Fahrzeugnavigationssystem (1) zu erzeugen;
Bereitstellen einer Anzeigeeinheit (30);
Bereitstellen einer Prozessoreinheit (20);
Erzeugen, durch die Prozessoreinheit (20), einer Route (50) für das Fahrzeug zu einem Ziel, das durch einen Benutzer ausgewählt ist, basierend auf den erzeugten Daten durch das Sensormittel (10) und Steuern der Anzeigeeinheit (30), um die Route (50) anzuzeigen, wobei die Route (50) mindestens einen Wendepunkt (60) und mindestens einen Punkt von Interesse (70) umfasst, der sich an dem mindestens einen Wendepunkt (60) befindet (S1);
Bestimmen, durch die Prozessoreinheit (20), basierend auf erzeugten Daten durch das Sensormittel (10), wenn sich das Fahrzeug einem Wendepunkt (60) nähert (S2);
**dadurch gekennzeichnet, dass**
wenn bestimmt wird, dass sich das Fahrzeug dem Wendepunkt (60) nähert (S3): Bestimmen, durch die Prozessoreinheit (20), eines Punkts von Interesse (72), der für eine Erkennung durch den Fahrer geeignet ist, an dem Wendepunkt (60) mit einer höchsten Erkennungsstärke unter einer Vielzahl von Punkten von Interesse (70, 72) auf einer anderen Seite als der Seite der Route (50), zu der die Route an dem Wendepunkt (60) wendet, nur dann, wenn auf der Seite der Route (50), zu der die Route (50) an dem Wendepunkt (60) wendet, kein Punkt von Interesse bestimmt wird, der für die Erkennung geeignet ist, durch Bestimmen, dass ein beliebiger Punkt von Interesse auf der Seite der Route (50), zu der die Route (50) an dem Wendepunkt (60) wendet, ein Punkt von Interesse (70) mit geringer Erkennungsstärke für den Fahrer ist;
Steuern, durch die Prozessoreinheit (20), der Anzeigeeinheit (30), um den bestimmten Punkt von Interesse (72) hervorzuheben, während die Vielzahl von Punkten von Interesse (70, 72) auf der Anzeigeeinheit (30) angezeigt wird (S4).

7. Fahrzeug, umfassend ein Fahrzeugnavigationssystem (1) nach einem der Ansprüche 1 bis 5.

## Revendications

1. Système de navigation de véhicule (1), comprenant :
- un moyen de détection (10) configuré pour générer des données destinées à être utilisées par le système ;
- une unité d'affichage (30) ;
- une unité de processeur (20) configurée pour :
générer une route (50) pour le véhicule vers une destination sélectionnée par un utilisateur sur la base des données générées par le moyen de détection (10) et commander l'unité d'affichage (30) pour afficher la route (50), dans lequel la route (50) comprend au moins un point de virage (60) et au moins un point d'intérêt (70) situé au niveau de l'au moins un point de virage (60) ;
déterminer, sur la base des données générées par le moyen de détection (10), le moment où le véhicule s'approche d'un point de virage (60) ;
**caractérisé par,**
lorsqu'il est déterminé que le véhicule s'approche du point de virage (60) :
la détermination d'un point d'intérêt (72) susceptible d'être reconnu par le conducteur au niveau du point de virage (60) avec une force de reconnaissance la plus élevée parmi une pluralité de points d'intérêt (70, 72) sur un côté différent du côté de la route (50) vers lequel la route tourne au niveau du point de virage (60), uniquement lorsqu'aucun point d'intérêt susceptible d'être reconnu n'est déterminé sur le côté de la route (50) vers lequel la route (50) tourne au niveau du point de virage (60), en déterminant que tout point d'intérêt sur le côté de la route (50) vers lequel la route (50) tourne au niveau du point de virage (60) est un point d'intérêt (70) avec une faible force de reconnaissance pour le conducteur ; et
commander l'unité d'affichage (30) pour mettre en évidence le point d'intérêt (72) déterminé tout en affichant la pluralité de points d'intérêt (70, 72) sur l'unité d'affichage (30).

2. Système (1) selon la revendication 1, dans lequel l'unité de processeur (20) est configurée pour déterminer un temps estimé d'arrivée au point de virage (60) sur la base des données générées et est configurée pour déterminer que le véhicule s'approche du point de virage (60), lorsque le temps estimé (Te) est inférieur à un temps seuil (Tth).

3. Système (1) selon l'une des revendications 1 à 2, dans lequel l'unité de processeur (20) est configurée pour déterminer une distance (D) estimée jusqu'au point de virage (60) sur la base des données générées et est configurée pour déterminer que le véhicule s'approche du point de virage (60), lorsque la distance (D) déterminée est inférieure à une distance seuil (Dth).

4. Système (1) selon l'une des revendications 1 à 3, dans lequel l'unité de processeur (20) est configurée pour mettre en évidence le point d'intérêt (72) déterminé sur l'unité d'affichage (30) par le biais d'une couleur, d'une intensité, d'une luminosité et/ou d'une animation.

5. Système (1) selon l'une des revendications 1 à 4, dans lequel le point d'intérêt (70, 72) est un nom de panneau, une icône, ou un bâtiment reconnaissable du point de vue du conducteur au niveau du point de virage (60).

6. Procédé permettant de fournir un guidage de virage à un conducteur d'un véhicule, comprenant :
la fourniture d'un moyen de détection (10) configuré pour générer des données destinées à être utilisées par un système de navigation de véhicule (1) ;
la fourniture d'une unité d'affichage (30) ;
la fourniture d'une unité de processeur (20) ;
la génération, par l'unité de processeur (20), d'une route (50) pour le véhicule vers une destination sélectionnée par un utilisateur sur la base des données générées par le moyen de détection (10) et la commande de l'unité d'affichage (30) pour afficher la route (50), dans lequel la route (50) comprend au moins un point de virage (60) et au moins un point d'intérêt (70) situé au niveau de l'au moins un point de virage (60) (S1) ;
la détermination, par l'unité de processeur (20), sur la base des données générées par le moyen de détection (10), du moment où le véhicule s'approche d'un point de virage (60) (S2) ;
**caractérisé en ce que,**
lorsqu'il est déterminé que le véhicule s'approche du point de virage (60) (S3) : la détermination, par l'unité de processeur (20), d'un point d'intérêt (72) susceptible d'être reconnu par le conducteur au niveau du point de virage (60) avec une force de reconnaissance la plus élevée parmi une pluralité de points d'intérêt (70, 72) sur un côté différent du côté de la route (50) vers lequel la route tourne au niveau du point de virage (60), uniquement lorsqu'aucun point d'intérêt susceptible d'être reconnu n'est déterminé sur le côté de la route (50) vers lequel la route (50) tourne au niveau du point de virage (60), en déterminant que tout point d'intérêt sur le côté de la route (50) vers lequel la route (50) tourne au niveau du point de virage (60) est un point d'intérêt (70) avec une faible force de reconnaissance pour le conducteur ;
la commande, par l'unité de processeur (20), de l'unité d'affichage (30) pour mettre en évidence le point d'intérêt (72) déterminé tout en affichant la pluralité de points d'intérêt (70, 72) sur l'unité d'affichage (30) (S4).

7. Véhicule comprenant un système de navigation de véhicule (1) selon l'une des revendications 1 à 5.
